Europäisches Patentamt

European Patent Office

Office européen des brevets

(19)

(11) Publication number: **0 241 162**
**A2**

# (12) EUROPEAN PATENT APPLICATION

(21) Application number: **87302301.4**

(22) Date of filing: **18.03.87**

(51) Int. Cl.⁴: **G02B 6/10**

(30) Priority: **09.04.86 GB 8608609**

(43) Date of publication of application:
**14.10.87 Bulletin 87/42**

(84) Designated Contracting States:
**DE FR IT**

(71) Applicant: **The General Electric Company,
p.l.c.
1 Stanhope Gate
London W1A 1EH(GB)**

(72) Inventor: **Skinner, Jeffrey David
35 Gondar Gardens
London NW6 1EP(GB)**

(74) Representative: **Kirby, Harold Victor Albert
The General Electric Company, p.l.c. Central
Patent Department Wembley Office GEC
Research Centre East Lane
Wembley Middlesex HA9 7PP(GB)**

(54) **Optical waveguide lenses.**

(57) An optical waveguide lens comprises a layer of waveguide material 3 on a substrate 2 of lower refractive index, the layer 3 having within it a multiplicity of discrete regions 1 possessing a higher refractive index and disposed in a circularly symmetric pattern having a packing density which is highest at the centre and decreases away from the centre.

Fig.4.

EP 0 241 162 A2

## Optical Waveguide Lenses

This invention relates to a lens system for an optical waveguide, and to the manufacture thereof.

Each of the presently used methods of fabricating optical waveguide lenses has one or another inherent disadvantage. Some types, such as Luneburg and geodesic, are circularly symmetric, but rely on precision engineering to ensure reproducibility. Conversely, there are thin film lenses which can be made by a batch photolithographic process, for example Fresnel and grating lenses, but these are not circularly symmetric so that off-axis performance tends to be poor.

An object of the present invention is to provide a novel form of waveguide lens construction which enables the advantages of the above forms of lenses to be combined, whilst substantially avoiding the attendant disadvantages.

According to the invention an optical waveguide lens comprises, on an underlying substrate, a layer of waveguide material possessing a higher refractive index than the substrate, and having formed within it a multiplicity of discrete regions possessing a higher refractive index than the waveguide layer, and disposed in a circularly symmetric pattern having a packing density which is highest at the centre and decreased radially away from the centre.

In use of such a lens, collimated light within the waveguide layer which traverses the patterned area forming the lens will undergo a focussing action since that portion of light passing through the centre of the area will see, on average, a higher refractive index than light passing through the area away from the centre. Thus, light passing through the centre of the patterned area has a larger optical path to traverse than light passing through an outer part of the area, which is the condition for a focussing action.

The degree of focussing produced will depend upon the difference between the refractive index of the material forming the discrete higher refractive index regions and that of the surrounding waveguide layer, as well as the size and number of those regions and the radial density distribution, but by an appropriate choice of these parameters it is possible to obtain a desired focussing action, having a diffraction limited performance with high efficiency and low scatter.

Preferably the refractive index of the discrete regions is at least 0.07 higher than that of the surrounding waveguide material, and the diameter of the regions is no greater than one micron, with the packing density of the regions following a parabolic function of the radial distance from the centre of the patterned area.

The waveguide layer, together with the discrete high refractive index regions, are preferably formed in a glass substrate utilising a photolithographic process. Thus a film of discrete deposits of a suitable metallic material in the desired pattern is applied by means of a photolithographic process to the surface of a soda glass substrate, the surface is treated so as to form a layer of increased refractive index, except in those places protected by the metallic pattern, the metallic material is then removed and the surface is again treated to produce an increase in refractive index of the hitherto unchanged parts of the surface above that of the surrounding layer.

Conveniently the film of resist material consists of titanium and the coated substrate surface is treated by exposure to molten caesium nitrate at a temperature of approximately 500°C, this causing an ion exchange process to take place, with sodium ions from the surface of the substrate glass being exchanged with caesium ions from the melt, thereby causing a higher refractive index layer to be formed in the surface of the glass and, following the removal of the titanium film, the surface is treated by exposure to molten silver nitrate at a temperature of approximately 250°C, this causing sodium ions from the glass in the previously coated regions to be replaced with silver ions from the melt to increase the refractive index in those regions above that of the surrounding layer. In such a process the caesium ions will not diffuse further into the glass in view of the lower temperature involved, and in addition will block the way for silver ions to exchange with sodium ions in those areas left exposed during the caesium ion exchange.

The initial exchange process is chosen to cause a layer to be formed which can support a single wave-guiding mode with light of a desired wavelength, the difference in the refractive indices of the layer and the substrate glass preferably being of the order of 0.023.

It will be appreciated that there will not be a clear interface between the silver and caesium exchanged regions as there will invariably be a limited amount of sideways diffusion, but this will not significantly affect the operation of the lens structure.

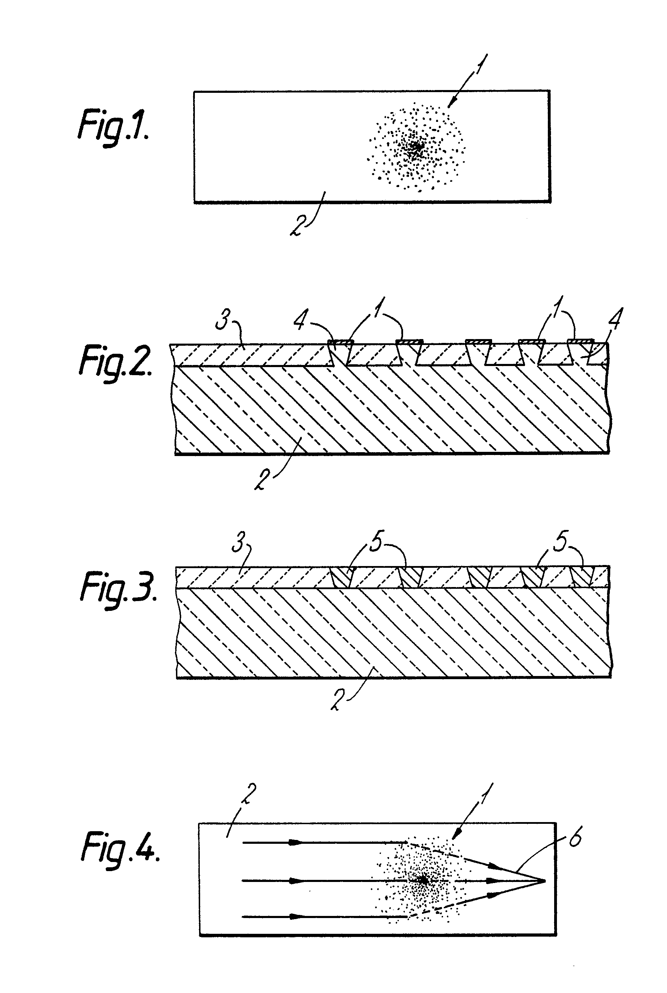

A method of fabricating a lens in accordance with the invention will now be described by way of example with reference to Figures 1 and 4 of the accompanying drawing, which illustrate diagrammatically and not to scale various stages in the production of the lens.

First, a photolithographic mask is made which consists of a very large number of dots, each less than one micron in diameter. The density of spots is greater in the centre of the pattern, gradually decreasing away from the centre as a parabolic function of the radial distance from the centre, the pattern accordingly being circularly symmetric.

The pattern of dots 1 in Figure 1 is photolithographically reproduced as a thin film of metal, such as evaporated titanium, on a soda-glass substrate 2.

The glass substrate 2 is then immersed in a receptacle in which molten caesium nitrate is maintained at a constant uniform temperature of approximately 500°C. Under these conditions sodium ions from the glass surface are exchanged with caesium ions from the melt, thereby causing a higher refractive index layer 3 to be formed at the surface of the glass as shown in the greatly enlarged Figure 2. The time of the exchange process is chosen so that the resulting structure can support a single waveguiding mode of a desired wavelength.

No diffusion will take place across the regions 4 that are covered by the titanium film 1, so that the glass beneath the dots remains free of caesium ions.

The titanium is then etched away and the glass substrate 2 then immersed in a receptacle containing molten silver nitrate at a temperature of approximately 250°C.

Silver ions will then diffuse into the glass also by an ion exchange process as at 5 (Figure 3), but only in the previously coated places where there are no caesium ions, as the caesium ions block the way for silver ions to exchange with sodium ions in those areas previously coated. The caesium ions will not diffuse further into the glass at the lower temperature of the second diffusion process, so that at the surface of the substrate there will be formed a layer 3 of caesium ion exchanged glass with regions 4 within it, determined by the initial pattern of the titanium deposits, having a higher refractive index.

The refractive index difference between the original glass 2 and the ion exchanged layer 3 is preferably approximately 0.023, with the regions of silver ion exchanged glass possessing a refractive index some 0.1 above that of the original glass. There will not,however, be a clear interface between the silver and caesium ion exchange regions below the surface of the substrate, due to sideways diffusion which tends to blur the boundaries.

Following the second ion diffusion process the substrate is cleaned, the area carrying the high refractive index regions then acting as a converging lens to collimated waveguiding light within the layer 3 as illustrated at 6 (Figure 4), since the portion of light passing through the centre of the area has a longer optical path to traverse than light passing through the area away from the centre, as previously explained.

It will, however, be understood that the invention is not restricted to the materials described, namely soda glass, caesium nitrate and silver nitrate, and the process will work on any suitable substrate material into which diffusion can take place with two different diffusing ions at diffusion temperatures which are sufficiently dissimilar, and which produce different index changes in the substrate material.

For example, lithium niobate can be doubly diffused, firstly with a pattern of titanium metal evaporated onto its surface and subsequently diffused into the lithium niobate and secondly by proton exchange in benzoic acid.

## Claims

1. An optical waveguide lens comprising on an underlying substrate 2, a layer of waveguide material 3 possessing higher refractive index than said substrate 2, characterised in that said layer 3 has formed within it a multiplicity of discrete regions 1 possessing a higher refractive index than the waveguide layer 3 and disposed in a circularly symmetric pattern, having a packing density which is highest at the centre and decreases radially away from the centre.

2. An optical waveguide lens as claimed in Claim 1 characterised in that the refractive index of a discrete region 1 is at least 0.07 higher than that of said waveguide material 3.

3. An optical waveguide lens as claimed in Claim 1 or 2 characterised in that the diameter of the discrete regions 1 is no greater than 1 micron.

4. An optical waveguide lens as claimed in any preceding claim characterised in that the packing density of said discrete regions 1 is a parabolic function of the radial distance from the centre.

5. A method of manufacturing an optical waveguide lens chacterised in that a film of discrete deposits 1 of a metallic material is applied in a desired pattern to the surface of a substrate 2 by means of a photolithographic process, said substrate surface is first treated so as to form a layer of increased refractive index 3 in those areas not protected by said metallic material, said metallic material is removed and said surface is subsequently treated to produce an increase in refractive index of the hitherto untreated parts of the surface which is greater than that produced in the first treatment of said layer.

6. A method of manufacturing an optical waveguide lens as claimed in Claim 5 characterised in that said substrate 3 is formed of soda glass.

7. A method of manufacturing an optical waveguide lens as claimed in Claim 5 characterised in that said film 1 is formed of titanium.

8. A method of manufacturing an optical waveguide lens as claimed in Claim 7 characterised in that said surface 2, with the discrete deposits 1 applied thereto, is firstly treated by exposure to molten caesium nitrate which causes the exchange of caesium ions with sodium ions from the uncovered region of said substrate surface, causing a higher refractive index layer 3 to be formed in said region of the surface and, after the removal of said titanium film 1, said surface 2 is subsequently treated by exposure to molten silver nitrate thus causing sodium ions from the previously covered regions of the surface to be replaced by silver ions to increase the refractive index in said previously covered regions of said surface above that of said layer 3 formed in said first treatment.

Fig.1.

Fig.2.

Fig.3.

Fig.4.